# EUROPEAN PATENT SPECIFICATION

(11) **EP 2 280 804 B1**
(45) Date of publication and mention of the grant of the patent: **18.04.2012**
(21) Application number: 08763831.8
(22) Date of filing: 22.04.2008
(51) Int. Cl.: B23Q 3/154, B25B 11/00

(54) **SELF-ANCHORING MAGNETIC APPARATUS AND CONTROL UNIT FOR CONTROLLING SAID MAGNETIC APPARATUS**
SELBSTVERANKERNDE MAGNETVORRICHTUNG UND STEUEREINHEIT ZUR STEUERUNG DER MAGNETVORRICHTUNG
APPAREIL MAGNÉTIQUE AUTO-PRÉHENSEUR ET SON UNITÉ DE COMMANDE

(43) Date of publication of application: 09.02.2011
(73) Proprietor: Tecnomagnete S.p.A., 20020 Lainate (IT); Politecnico di Milano, 20133 Milano (IT)
(72) Inventor: CARDONE, Michele, I-20090 Trezzano S/N (MI) (IT); COSMAI, Giovanni, I-20027 Rescaldina (MI) (IT); FARANDA, Roberto, I-20149 Milan (IT); GIGLIO, Antonino, I-20016 Pero (MI) (IT)
(74) Representative: Ciceri, Fabio
(86) International application number: PCT/IT2008/000279
(87) International publication number: WO 2009/130722

(56) References cited:
- EP-A- 0 254 939
- EP-A- 0 345 554
- GB-A- 531 600

## Description

The present invention concerns a self-anchoring magnetic apparatus and a control unit therefor, particularly a self anchoring magnetic apparatus that is able to magnetically clamp ferrous elements when the magnetic apparatus is in an active state and release said ferrous elements when the magnetic apparatus is in an inactive state, as defined in the preamble of claim 1. Such an apparatus is known from the patent application document EP-A-0 254 939.

As used herein, the term magnetic apparatus is intended to indicate:
- a permanent-magnet apparatus, i.e. an apparatus that does not require any power supply when used for clamping or for changing its state from active to inactive and vice versa, and is formed with permanent magnets in appropriate arrangement within the apparatus;
- an electro-permanent apparatus, i.e. an apparatus that does not require any power supply when used for clamping and requires power supply when it is activated and inactivated, and is formed with reversible permanent magnets and, if needed, with static permanent magnets in appropriate arrangement within the apparatus;
- an electromagnetic apparatus, i.e. an apparatus that requires power supply when used for clamping, whose magnetic core is made of ferromagnetic material.

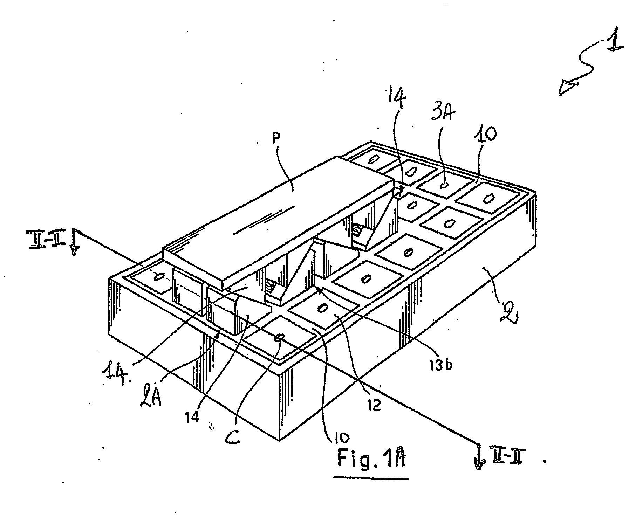

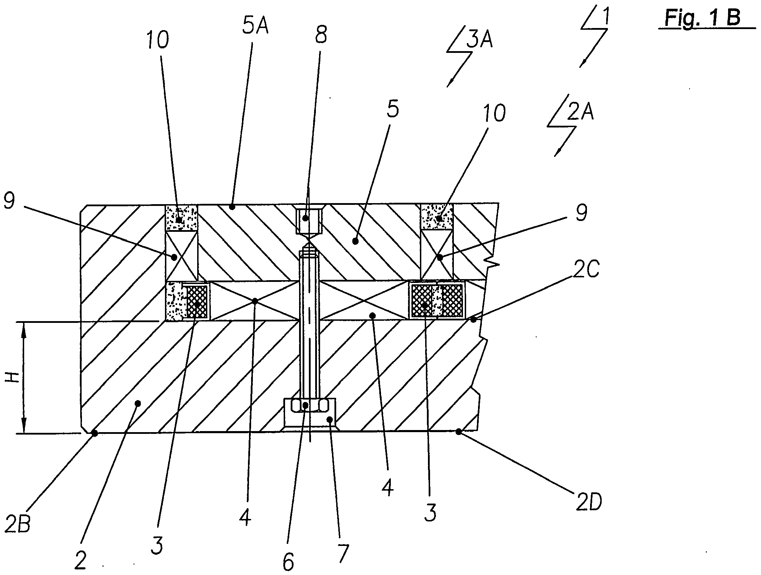

In prior art, also with reference to Figures 1A and 1B, a magnetic clamping apparatus 1 for example of the electro-permanent dual-magnet type, comprises a housing 2 is made from a block of ferromagnetic material which has a bottom 2B, with a number "N" of pole pieces 3A arranged on its inner surface 2C.

Otherwise, the housing 2 may be formed by assembling together various components with methods well known to those skilled in the art.

Each pole piece 3A (see Figure 1B), in the case of an electro-permanent apparatus, comprises at least:
- one pole piece collector 5,
- one reversible permanent magnetic core 4 and
- one electric coil 3 (also known as solenoid) for changing the magnetization state, which extends around the reversible permanent magnetic core 4.

Particularly, it can be noted that the electric coils 3 have such a configuration as to define a space for receiving the reversible permanent magnet 4, such as a magnet of the AtNiCo type, above which the pole piece collector 5 is placed.

Furthermore, the pole pieces 3A may also comprise one or more static magnets 9, e.g. made of ferrite or NdFeB, also suitably oriented, that can generate an additional permanent magnetic field for clamping the ferrous element P.

Also, according to well known techniques, the pole pieces 3A are associated with the housing 2, for example, by means of a screw 6 received in a suitable hole 7, so that the solenoid 3-reversible magnet 4 assembly can be clamped into a pack.

Furthermore, pole extensions 14 may be respectively associated with one or more pole pieces 3A, when specifically needed for machining the ferrous elements P.

A resin casting step 10 is also provided, whereby the magnetic apparatus 1 can be made substantially impervious to impurities and/or liquid infiltrations, and any gaps can be filled.

Still with reference to Figures 1A and 1B, it can be noted that the pole piece collector 5 of each pole piece 3A consists of a substantially parallepepipedal ferromagnetic piece having a square plan shape.

It shall be noted that, as used herein, the term pole piece collector 5 is intended to indicate an element that has one side 5A whose surface is magnetically neutral when the magnetic apparatus 1 is inactivated and magnetically active when the magnetic apparatus 1 is activated.

In other words, the pole piece collector 5 may have four of its six surfaces in which the magnetic field is oriented in one direction, the fifth surface in which the direction of the magnetic field can be changed into a polarity that is identical or opposite to the magnetic field in the other four surfaces and a sixth surface, coincident with the side 5A, which is:
- magnetically neutral when the magnetic field generated on the fifth surface has a polarity opposite to the magnetic field of the other four surfaces (the magnetic apparatus is inactive) or
- magnetically active when the magnetic field generated on the fifth surface has the same polarity as the magnetic field of the other four surfaces (the magnetic apparatus is activated).

In short, the pole piece collector 5 is an element designed to convey the magnetic flux generated by the reversible permanent magnetic core 4 to the surface of the side 5A to form a magnetic clamping surface 2A.

It shall be noted that the surfaces of the sides 5A of the "N" pole piece collectors 5 form, as a whole, the magnetic clamping surface 2A for firmly clamping the ferrous elements P to be machined.

It should be further noted that, as used herein, the term activate/inactivate, concerning the magnetic apparatus, is intended to indicate the possibility of changing the magnetization state of the reversible permanent magnet 4 by the action of an electric control that can generate a suitable electromagnetic field in the electric coil 3.

Yet it shall be noted that, when the magnetic apparatus 1 lies on a surface that is made from a non ferromagnetic material, the housing 2 has such a bottom 2B that the whole flux generated by the reversible permanent magnet 4 is contained within the thickness H of the bottom 2B.

Thus, no magnetic clamping force is present in the outer surface 2D of the bottom 2B, i.e. the bearing surface of the magnetic apparatus 1, once that the magnetic apparatus 1 has been activated.

Therefore, the surface 2D is magnetically neutral.

It shall be noted that the thickness H is designed to allow the magnetic flux to be short-circuited and prevent leakage thereof from the bottom.

For this purpose, the thickness H is suitably dimensioned to prevent magnetic flux leakages from the surface 2D, as well as contributing to the required mechanical resistance of the magnetic apparatus 1.

Such mechanical apparatus is usually associated with ferrous element machining devices, such as machine tools or ferromagnetic workpiece clamping machines in general.

Particularly, the outer surface 2D of the bottom 2B of the housing 2 of the magnetic apparatus 1 is mechanically coupled to these machining devices.

Thus, once the magnetic apparatus 1 has been activated, the clamping surface 2A can magnetically keep the ferrous element P to be machined and the outer surface 2D of the bottom 2B of the housing 2 is mechanically coupled to the machining device.

It shall be noted that the magnetic apparatus and the machining device may be coupled in either removable or permanent manner.

For instance, when the bottom 2B of the magnetic apparatus is to be removably coupled to a frame (or bed) of a machine tool, coupling means are used, such as vises, bolts and/or screws, that can mechanically hold such magnetic apparatus during machining of the ferrous element.

In practice, prior to machining of a ferrous element P, the bottom 2B of the magnetic apparatus 1 has to be first mechanically connected to the machining device by combining one or more of these coupling means, thereby causing the surface 2D to be adequately moved towards the machine bed.

Then, the ferrous element P shall be placed on the clamping surface 2A and the magnetic apparatus shall be activated for mechanically clamping the ferrous element P to such clamping surface.

Nonetheless, the connection between the bottom 2B of the housing 2 and the machining device is a mechanical point connection, the parts being only coupled at the points in which the coupling means are present.

This may cause undesired mechanical stresses during machining of the ferrous element P, as well as poor vibration absorption, thereby affecting the accuracy with which the ferrous element is machined.

It is further apparent that, whenever the magnetic apparatus has to be used with a machining device other than the one with which it is currently mechanically connected, all the mechanical couplings have to be removed; this involves high costs in terms of labor time and productivity losses due to shutdowns.

The above clearly shows that, both for the manufacturers of magnetic apparatus for clamping ferrous elements, and for the users thereof, the need is strongly felt of having magnetic apparatus that eliminate the vibrations induced by mechanical machining of ferrous workpieces.

Furthermore, the need further arises of improving the usability of magnetic apparatus, allowing for quicker interchangeability of the various machining devices and ensuring connection with the machine beds without requiring the above mentioned coupling means, or requiring a smaller number thereof. Therefore, the present invention is based on the issue of providing a magnetic apparatus for clamping ferrous work pieces, that has such structural and functional characteristics as to fulfill the above need, while obviating the above prior art drawbacks..

This issue is addressed by a magnetic apparatus for magnetically clamping ferrous elements when the magnetic apparatus is in an active state and releasing said ferrous elements when the magnetic apparatus is in an inactive state, as defined in claim 1.

Also, this issue is addressed by a control unit for controlling the operating conditions of a magnetic apparatus for magnetically clamping ferrous elements as defined in combination with the magnetic apparatus in claim 15.

The apparatus of the present invention affords significant damping of the vibrations transmitted by the machine tool to the ferrous workpiece being machined, because the apparatus is integrated with the bed of the machine tool.

Furthermore, thanks to the present invention, the bottom of the magnetic apparatus may be self-clamped to a bed of a machine tool, without using mechanical couplings, and while performing the mechanical machining processes on the ferrous workpiece P magnetically clamped to the clamping surface.

Further features and advantages of the magnetic apparatus of the present invention will appear from the following description of one preferred embodiment thereof, which is given by way of illustration and without limitation with reference to the accompanying figures, in which:
- Figure 1A is a perspective view of a prior art magnetic apparatus;
- Figure 1B is a partially sectional view taken along line II - II of the magnetic apparatus of Figure 1A;
- figure 2A is a perspective view of a magnetic apparatus when associated with a workpiece to be machined and of the control unit, according to the present invention;
- Figure 2B is a partially sectional exploded view of a detail of the magnetic apparatus of Figure 2A;
- Figure 3 is a sectional view of a first embodiment of the present invention;
- Figures 4A, 4B and 4C show several operating steps of the magnetic apparatus as shown in Figure 3;
- Figure 5 is a sectional view of a second embodiment of the present invention;
- Figures 6A, 6B and 6C show several operating steps of the magnetic apparatus as shown in Figure 5;
- Figure 7A is a sectional view of a third embodiment of the magnetic apparatus of the present invention;
- Figure 7B is a sectional view of a fourth embodiment of the magnetic apparatus of the present invention;
- Figures 8A to 8B are a sectional view of a fifth embodiment of the magnetic apparatus of the present invention and its different operating steps respectively;
- Figures 8C to 8D are a sectional view of a sixth embodiment of the magnetic apparatus of the present invention and its different operating steps respectively;
- Figure 9 shows a possible use of the magnetic apparatus of the present invention.

The present invention will be described hereinafter with reference to a magnetic apparatus of the electro-permanent dual-magnet type, but similar results will be achieved using a permanent magnet, electromagnetic, or manually operable apparatus, and the like.

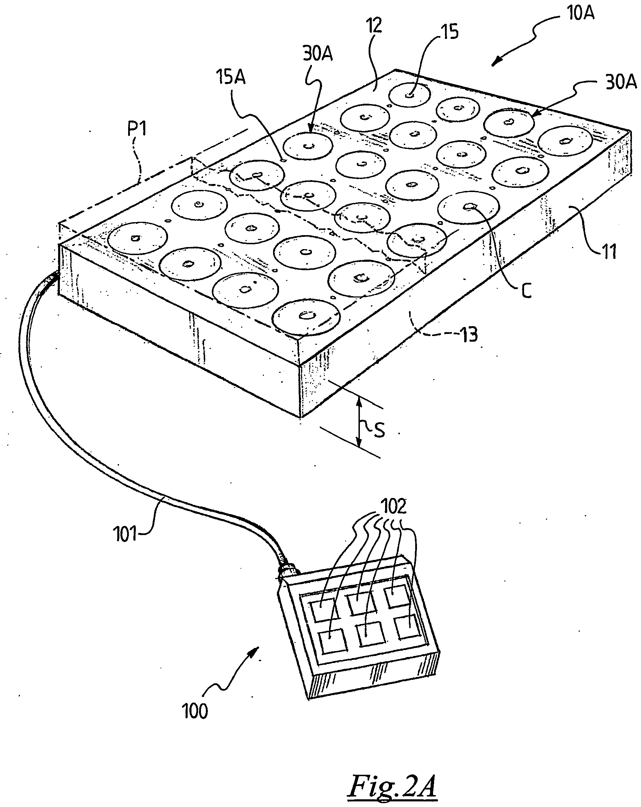

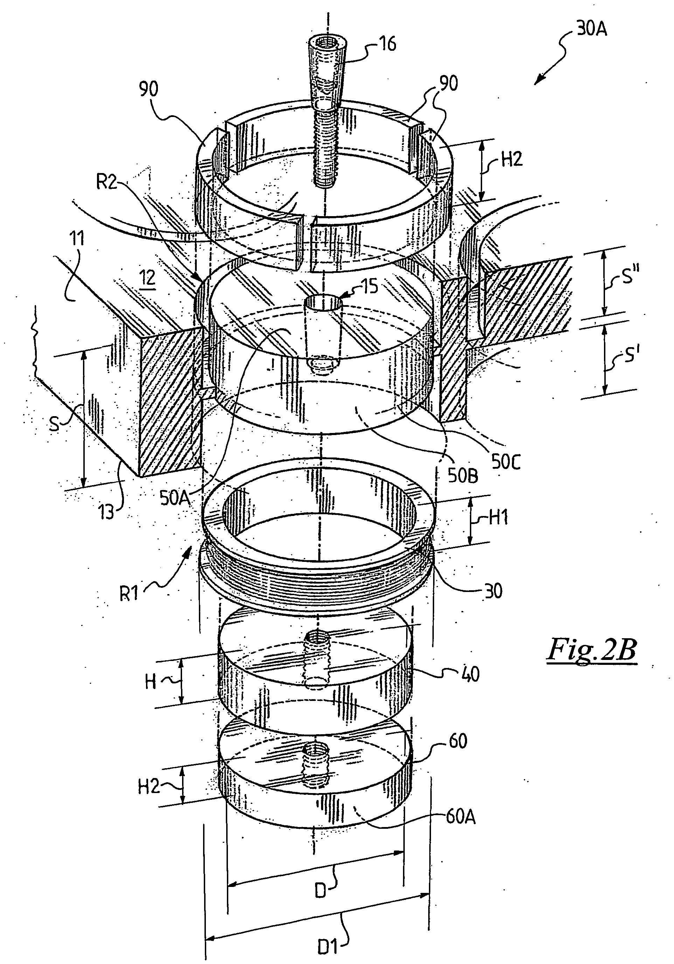

Referring now to the annexed Figures 2A and 2B, numeral 10A generally designates a magnetic clamping apparatus of the present invention.

The magnetic apparatus 10A for magnetically clamping ferrous elements P1 comprises a support structure 11, having a plurality "N" of pole pieces 30A within its thickness S.

Particularly, the support structure 11 is formed with respective first and second sides 12, 13 at the opposed larger surfaces.

Preferably, the first and second sides 12, 13 extend parallel to each other, thereby defining respective surfaces.

As shown hereinbelow a surface, e.g. the one provided by the side 12, is designed to be the surface against which the ferrous elements P1 to be machined are magnetically clamped, whereas the other surface, e.g. the one defined by the side 13, is designed to be the surface to be magnetically clamped to a ferrous material P2, such as the bed of a machine tool.

Advantageously, a control unit 100 is provided for operable connection to the magnetic apparatus 10A to control the operating conditions of such apparatus.

Particularly, the control unit 100 is electrically associated with the magnetic apparatus 10A via an electric connection 101 for controlling the electric coils 30, to change the magnetization state of the magnetic cores 40 according to the specific operating conditions.

The control unit 100 has a plurality of buttons 102 that are designed to be pressed by an operator to control the operation of the magnetic apparatus 10A according to the operating conditions, as described in further detail hereinbelow.

Particularly, the pole pieces 30A comprise at least one first pole piece collector 50, a lateral portion 50A whereof forms a portion of said first side 12.

Particularly, it shall be noted that the first pole piece collector 50 is advantageously formed of one piece with the support structure 11, to create a monolithic magnetic apparatus 10A.

Thus, as shown in Figure 2B, the first pole piece collector 50 is part of the support structure 11, because it is obtained by machining processes, such as material removal, designed to shape the first pole piece collector 50.

For this purpose, the support structure 11 has recesses within the thickness S of the support structure 11.

Such recesses are conformed both to define the first pole piece collector 50 and to receive the elements that form the pole piece 30A, as described in greater detail hereinbelow.

Advantageously, the recesses include first recesses R1 extending from the outer surface of the second side 13 within the thickness S of the structure 11.

In addition to defining the bottom 50B of the first collector 50, these recesses R1 are designed to receive at least some of the elements that compose the pole piece 30A.

Indeed, these recesses R1 are formed within the thickness S of the support structure 11, extending from the outer surface of the second side 13 to a depth S', and are suitably shaped to both form the bottom 50B of the first pole piece collector 50 and receive part of the elements that compose the pole piece 30A.

Furthermore, the recesses include second recesses R2 extending from the outer surface of the first side 12 within the thickness S of the support structure 11.

These recesses R2 define the lateral surface 50C of the first pole piece collector 50, and are also designed to receive additional optional elements that compose the pole piece 30A.

It shall be noted that the lateral surface 50C of the first collector 50 extends substantially transverse to the first and/or second sides 12 and/or 13.

Particularly, the lateral surface 50C forms no portion of the side 12.

In other words, R2 are formed within the thickness S of the support structure 11 from the outer surface of the first side 12 to a depth S", and are suitably shaped to form the lateral surface 50c of the first pole piece collector 50 and to receive optional elements' composing the pole piece 30A.

As particularly shown in Figure 2B, i.e. an exploded view of a pole piece 30A and a partially sectional view of a magnetic apparatus 10A, the pole pieces 30A include at least one first magnetic core 40 and an electric coil 30 extending therearound for changing the magnetization state of the first magnetic core 40.

For example, the first reversible permanent magnetic core 40 is embodied by a reversible permanent magnet of the AlNiCo type.

Advantageously, the pole.pieces 30A have a second pole piece collector 60, a lateral portion 60A whereof forms a portion of said second side 13.

The second pole piece collector 60 is placed against the first magnetic core 40 for clamping such magnetic core 40 and the electric coil 30 into a pack against the bottom 50B of the first pole piece collector 50.

Still referring to Figure 2B, it can be noted that the pole pieces 30A may further include second magnetic cores 90.

These second magnetic cores 90 are suitably oriented and located proximate to the faces of the first pole piece collector 50, using techniques well known to those of ordinary skill in the art, and will not be described in detail.

The second magnetic cores 90 are preferably embodied by permanently magnetized non-reversible magnetic cores, for example made of ferrite or NdFeB.

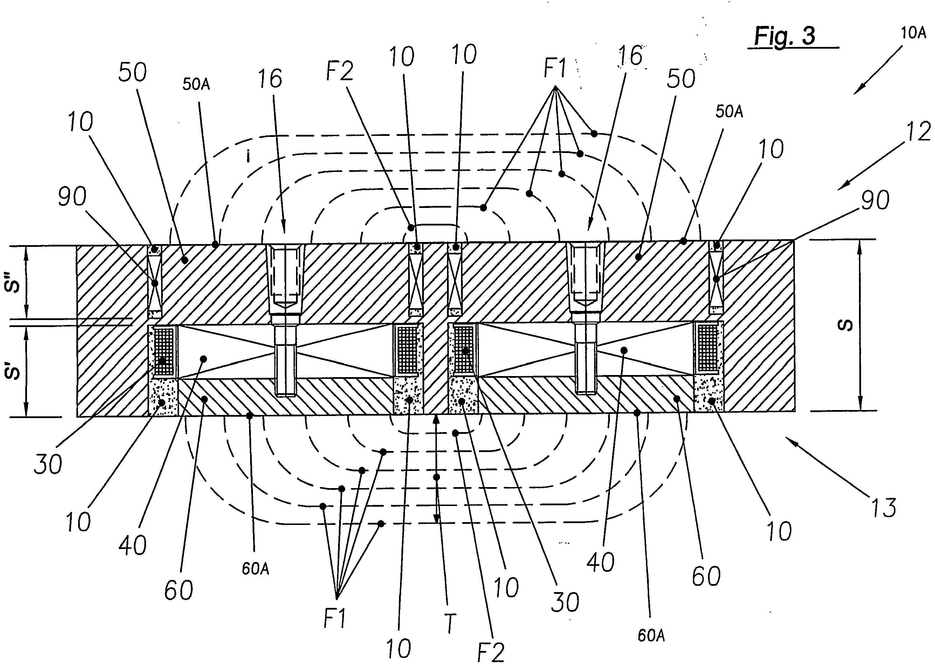

Furthermore, also referring to Figure 3A, for the purpose of covering these magnetic cores 90, a step is provided in which the gaps 10 are filled, e.g. with resin, for ensuring imperviousness to impurities and/or liquid infiltrations.

Advantageously, in the preferred embodiment of the magnetic apparatus 10A, these elements are embodied by elements of circular plan shape.

Particularly, the following is provided:
- the first magnetic core 40 is embodied by a cylindrical body having a thickness H and a diameter D,
- the electric coil 30 is embodied by an annular element having a thickness H1 and a diameter D1, where D1 is greater than D.
- the second pole piece collector 60 is embodied by a cylindrical body having a predetermined thickness H2 and a diameter D equal to the diameter of the magnetic core 40,
- the second magnetic core 90 is embodied by a plurality of portions of an annular element having a diameter D1 and a thickness H2.

It shall be noted that the thickness H1 of the second pole piece collector 60 is adapted to allow emission of the magnetic flux or most of the magnetic flux generated by the magnetic cores 40, for the surface of said second side 13 to be magnetically active, i.e. for reaching a sufficient magnetic force value to clamp the magnetic apparatus 10A by its second side 13.

Otherwise, the elements that form the N pole pieces 30A might have a quadrangular, rectangular or any other plan shape.

It shall be noted that the "N" pole pieces 30A may be freely arranged within the structure 11, i.e. without following a predetermined geometric pattern.

Nonetheless, according to a preferred embodiment, the "N" pole pieces 30A are arranged within the structure 11 according to a predetermined pattern; for example, the "N" pole pieces 30A may be arranged according to a matrix pattern (see Figure 2A).

Preferably, the center C of the "N" pole pieces 30A lies along the lines and/or columns that form the matrix.

Advantageously, according to the usual modes of use of the apparatus 10A, holes 15 may be formed at the center C of the pole piece collector 50.

It shall be noted that a fastener device 16 as disclosed in the Italian Patent Application MI2007A001227 can be associated with each hole 15.

The shank of a pole extension (not shown) can be associated with such fastener device 16.

A description of the technical and operating characteristics of a polar extension, as well as the advantages of the use of a pole extension may be found, for instance in the Italian Patent IT1222875 and in the Patent Application MI2007A001353.

Particularly, if the holes 15 are formed at the center C of a pole piece 30A and the pole pieces 30A are arranged in matrix pattern, then such holes 15 are aligned along predetermined axes that are parallel to the axes of a reference system with orthogonal Cartesian axes X-Y.

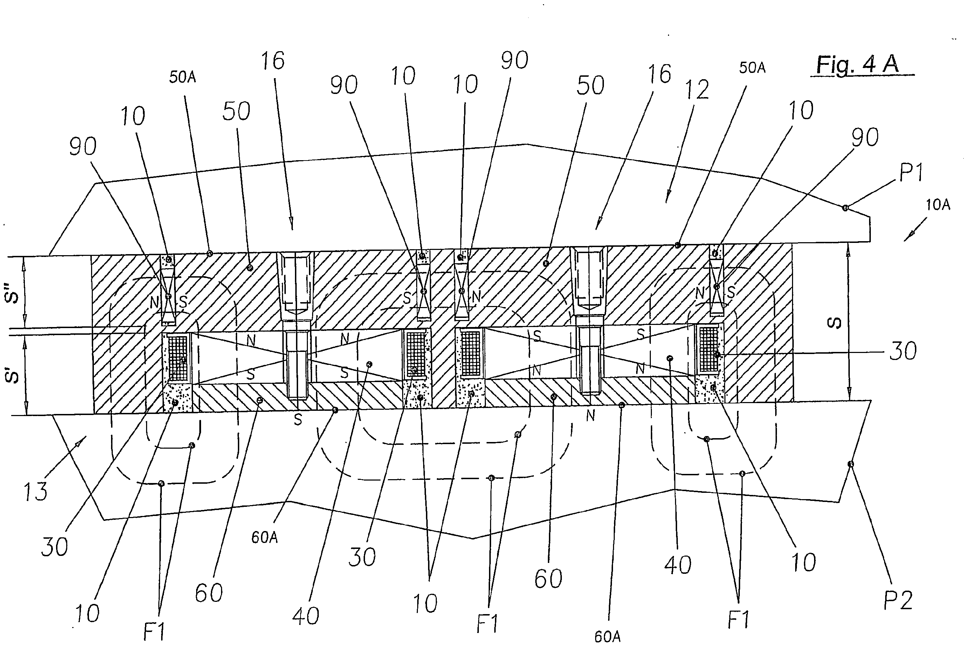

Now that the static characteristics of the magnetic apparatus 10A have been described, also with reference to Figures 3 and 4A to 4C, the operating characteristics will be described hereinbelow.

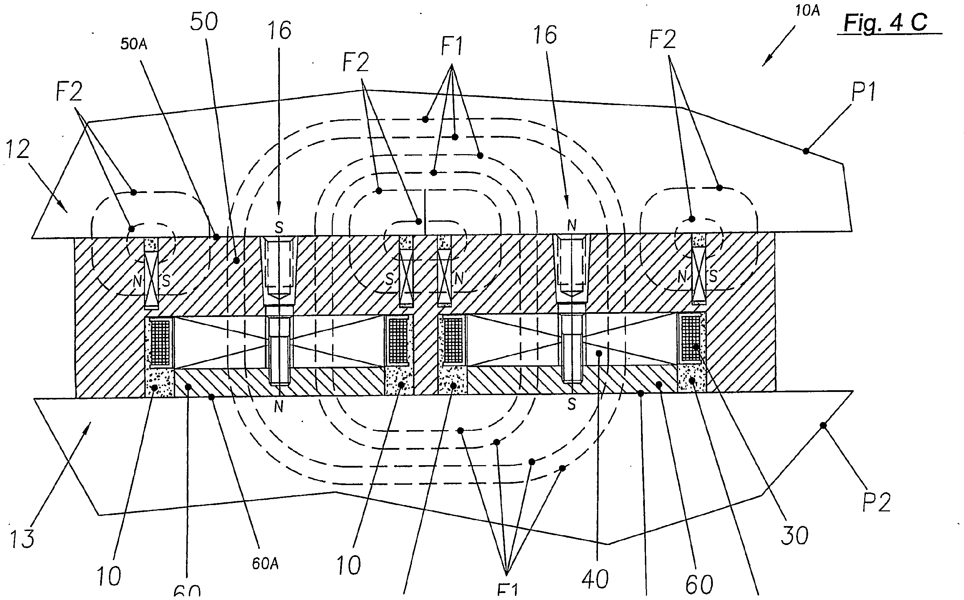

Particularly, considering Figure 4C, it shall first be noted that the pole pieces 30A generate at least one first magnetic flux F1 on such first side 12, when the magnetic apparatus 10A is in an operating condition, and hence is magnetically active.

Such magnetic flux F1 can ensure magnetic clamping of first ferrous elements P1.

Advantageously, the first magnetic flux F1 defines an additional magnetic clamping surface at the second side 13, for magnetically clamping second ferrous elements P2 (see figure 4C).

In other words, when the magnetic apparatus 10A is in an operating state, the pole pieces 30A generate at least the same magnetic flux F1 adapted to ensure magnetic clamping of second ferrous elements P2.

It shall be noted that the magnetic flux F1 emitted from a pole piece 30A has a direction opposite to the flux emitted from the pole piece adjacent thereto to link therewith and create a so-called bidirectional circuit.

The operation and advantages of the bidirectional magnetic circuit are described in US 4,356,467.

Thus, the at least one first magnetic flux F1 is emitted from the second side 13 to a predetermined field depth T.

It shall be noted that, as used herein, the term field depth T is intended to indicate the minimum distance from the outer surface of the second side 13 within which the whole magnetic flux F1 can be shorted between two different adjacent pole pieces 30A.

Particularly, the magnetic field generated by the magnetic apparatus 10A from the surface of the side 13 and emitted from said second side 13, may have a field depth T that is at the most equal to the maximum linear dimension of the second pole piece collector 60.

It shall be noted that the term maximum linear dimension of the second pole piece collector 60 is intended to indicate the following:
- if the second pole piece collector 60 is a cylinder, the maximum linear dimension is the maximum value selected between the height and/or the diameter;
- if the second pole piece collector 60 is a cube, the maximum linear dimension is the value of the side;
- if the second pole piece collector 60 is a parallelepiped, the maximum linear dimension is the maximum value among the side, the height and/or the width.

Therefore, a magnetic flux may be generated from the surface of the side 13, having such a field depth T as to generate a sufficient magnetic force to firmly secure a ferrous element P2 to the magnetic apparatus 10A.

It shall be noted that the term sufficient magnetic force to firmly secure a ferrous element P2 to the magnetic apparatus 10A is intended to indicate a force value at least 15% higher than the maximum force that such magnetic apparatus 10A can exert upon the surface of the first side 12.

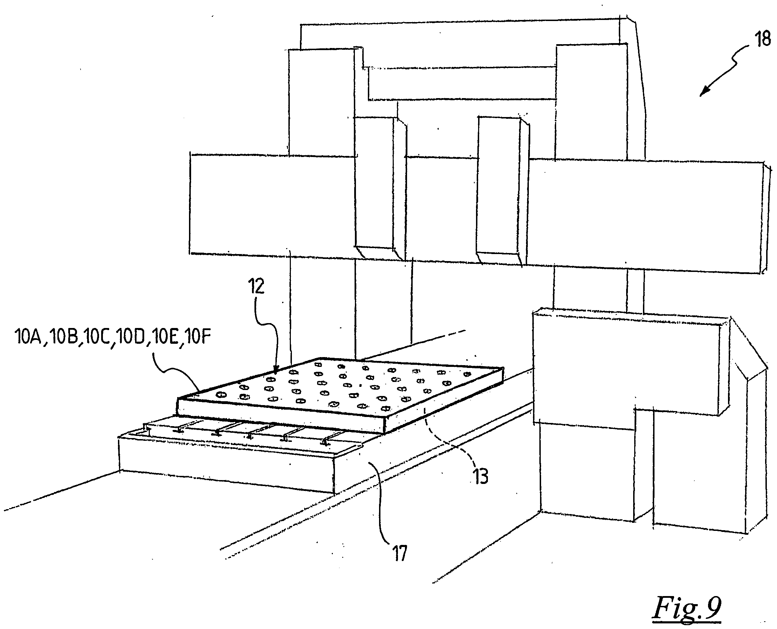

It shall be noted that, under ordinary operating conditions of the magnetic apparatus 10A, as shown for example in Figure 9, the clamping condition of the surface of the second side 13 is better than the clamping condition of the surface of the first side 12.

Indeed, the surface of the second side 13 is entirely covered because such second side 13 is wholly in contact with the machine tool bed whereas the first side 12 is associated with the ferrous workpieces P1 to be machined, which are usually smaller than the surface of such first side 12 and generally have a higher gap.

Thus, the gap between the machine tool bed and the second side 13 of the magnetic apparatus 10A is very little, whereas a more or less important gap will exist between the first side 12 and the ferrous workpieces to be machined P1.

Therefore, under these conditions, the magnetic force value developed on the surface of the second side 13 is similar to the magnetic force value developed on the surface of the first side 12.

Still referring to Figure 3, if the magnetic cores 90 are also actually received in the recesses R2, the latter are able to generate a second magnetic flux F2 on such first clamping side 12, so that said first ferrous elements P1 can be magnetically clamped by said first flux F1 and said second flux F2.

Therefore, the magnetic apparatus 10A as shown in Figures 3 and 4A to 4C can have three different operating states, that is:
- activated;
- inactivated;
- mounting/removal.

The magnetic apparatus 10A as shown in Figures 3 and 4A to 4C requires a control unit 100 that is able to appropriately change the magnetic field generated by the first magnetic core 40.

Particularly, such control unit 100 is an electric control unit that performs a power control during the above three different operating states.

Particularly, the control unit 100 performs a specific control for each of the three different operating states, that is:
- in the activated state, a polarization cycle is carried out on the first magnetic core 40 in one direction,
- in the inactivated state, a polarization cycle is carried out on the first magnetic core 40 in the opposite direction,
- in the mounting/removal state, a demagnetization cycle is carried out on the first magnetic core 40.

In other words, the control unit 100 is able to:
- cause the field of the first magnetic core 40 to have the same direction as the field generated by the second magnetic core 90 for activation of the surface 12, or
- cause the field of the first magnetic core 40 to have a direction opposite to the field generated by the second magnetic core 90 for inactivation of the surface 12, or
demagnetize the first magnetic core 40 to allow mounting and/or removal of the magnetic apparatus 10A.

For this purpose, the control unit 100 is embodied by an electric circuit comprising at least two electronic tubes (diodes, SCR, etc.) in antiparallel arrangement to allow passage of the positive half-wave of current in the activated operating state, passage of the negative half-wave of current in the inactivated operating state and combined passage of positive and negative half-waves of current in the mounting/removal state.

Thus, also with reference to Figures 4A to 4C, which show the operating steps of the apparatus 10A, a particular procedure has to be carried out for inactivating the surface of the second side 13 through the above mentioned control unit 100.

Particularly, referring now to Figure 4C, the first side 12 and the second side 13 of the magnetic apparatus 10A are active; in this condition, the field of the permanent magnet 40 has the same direction as the field generated by the permanent magnet 90.

This operating state, allows the magnetic apparatus 10A to be firmly locked, or self-clamped to the ferromagnetic element P2.

Therefore, this operating condition allows safe machining of the ferromagnetic element P1, while the magnetic apparatus 10A is firmly locked or self-clamped to the element P2 which, as described with reference to Figure 9, can be a machine tool bed.

Thus it will be appreciated that, when the magnetic apparatus 10A is in an activated operating state:
- the first side 12 forms a first clamping surface for magnetically clamping first ferrous elements P1 by the first magnetic flux F1 and/or the second flux F2,
- whereas the second side 13 forms a second clamping surface for magnetically clamping second ferrous elements P2 by the first magnetic flux F1.

In other words, once the magnetic apparatus 10A is in an activated operating state, the flux lines F1 and/or F2 provide the first magnetic poles on the surface 50A of the first pole piece collector 50 and also provide second magnetic poles on the surfaces 60A of the second pole piece collector 60.

To this end, the flux lines F1 of the magnetic field generated by the reversible permanent magnets 40 penetrate both the first ferrous elements P1 and the second ferrous elements P2.

This is because the amount of magnetic flux generated by the permanent magnet 40 does not find a ferromagnetic short-circuiting path of adequate section within the support surface 11 at the second side 13, and hence comes out to a predetermined field depth T, sufficient for firm clamping of the second ferrous elements P2.

Indeed, the magnetic apparatus 10A has no ferromagnetic bottom, i.e. the support structure 11 has no ferromagnetic short-circuiting section adapted to convey the whole magnetic flux generated by the permanent magnet 40.

Thus, when the magnetic apparatus 10A is in an operating state, the flux lines generated by the magnetic field of the first magnetic core 40 are short-circuited with the ferrous element P2, when said second side 13 is laid upon such ferrous element P2.

Thus, the second side 13 of the magnetic apparatus 10A is magnetically self-clamped or self-locked to the second ferrous element P2.

Thus, for example, the clamping surface of the side 12 is used for magnetic clamping of the ferrous elements P1 to be machined, whereas the second side 13 may be magnetically clamped to a machine tool bed.

In other words, the first side 12 forms, for example, the magnetic clamping surface that is usually designed for magnetic clamping of the ferrous elements to be machined, whereas the second side 13 forms the bottom of the magnetic apparatus 10A that can be magnetically secured to a machine tool bed or to any ferromagnetic element.

Therefore, advantageously, the magnetic apparatus 10A may magnetically clamp the ferrous element P1 and, while requiring little or no mechanical restraints, such magnetic apparatus 10A can be magnetically clamped or can magnetically clamp the ferrous element P2.

Referring now to Figure 4A, there is shown the inactivated operating state, i.e. the state in which the ferromagnetic element P1 can be safely moved closer or apart, although the magnetic apparatus 10A is firmly locked or self-clamped to the ferromagnetic element P2.

In this configuration, the first side 12 of the magnetic apparatus 10A is inactive, and the second side 13 of the magnetic apparatus 10A is active when the field of the permanent magnet 40 has a direction opposite to that of the field generated by the second magnetic core 90.

It will be particularly appreciated from the above that, with reference to the operating states as shown in Figures 4A to 4C and regardless of the state of the first side 12 (magnetically active or not), the surface of the second side 13 is always active.

In the above operating situations, no installation of the magnetic apparatus 10A can be safely carried out, which means that the magnetic apparatus 10A cannot be safely separated, and hence mounted and/or removed from the ferromagnetic element P2.

In order to ensure the safety of this mounting and/or removal step, a ferromagnetic plate cover is needed, to entirely cover the first side 12 and a particular procedure has to be carried out for demagnetization of the first magnetic core 40.

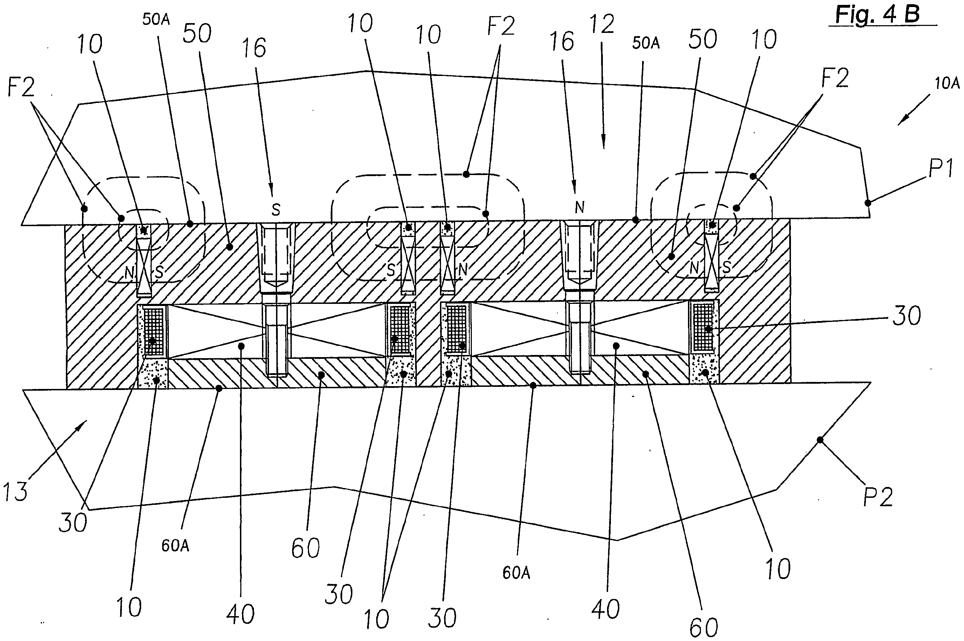

Particularly, also with reference to Figure 4B, for the magnetic apparatus 10A to be safely associated with a ferromagnetic element P2, the ferromagnetic place cover has to be laid over the surface 12 and the permanent magnet 40 has to be demagnetized.

This plate cover of ferromagnetic material which coincides, in the view of Figure 4B, with the ferrous workpiece P1, is placed in contact with the surface 12 and advantageously allows all the flux emitted from the surface 12 to be enclosed; the plate cover and the ferrous workpiece P1 to be machined may also be separate.

Conversely, the control unit 100, in the operating state of Figure 4B shall first carry out a cycle for activating the side 12 and then a cycle for demagnetizing the permanent magnet 40.

In this particular operating state, the ferromagnetic plate cover is secured against the magnetic apparatus 10A only by the magnetic flux F2 generated by the permanent magnets 90.

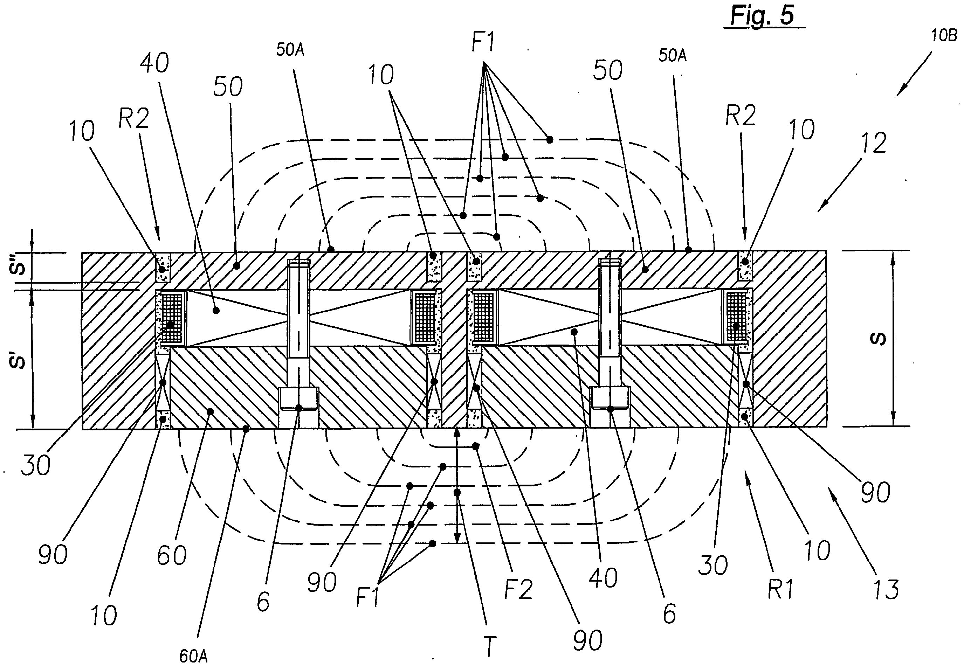

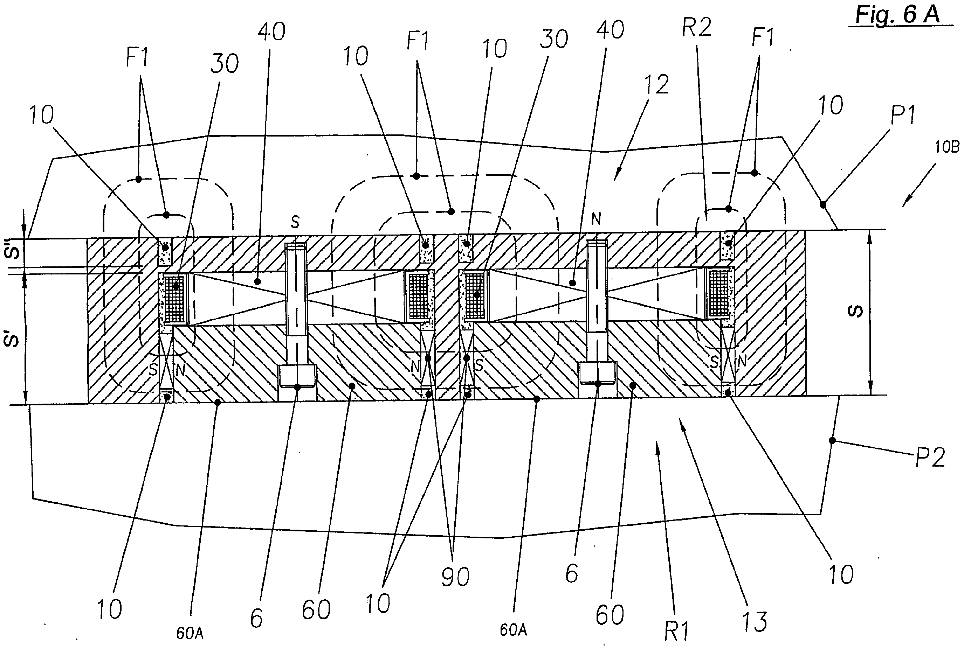

Referring now to Figures 5 and 6A to 6C, in which previously described elements are designed by identical reference numerals, a magnetic apparatus 10B is shown, which differs from the magnetic apparatus described with reference to Figures 3 to 4C only for certain structural features as set forth below.

Particularly, it can be seen that the recesses R1 not only house the second pole piece collector 60, the electric coil 30 and the first magnetic core 40, but also receive second magnetic cores 90, if any.

Conversely, the recesses R2 in the structure 11 of the apparatus 10B are only used to receive the filling material 10.

It shall be noted that the activated and inactivated states of the second side 13 and the first side 12 of the magnetic apparatus 10B are advantageously interchangeable with respect to what is shown with reference to the magnetic apparatus 10A.

In other words, the activation and inactivation cycles to be carried out by the control 100 for activating and/or inactivating the first and second sides 12, 13 are exactly as described above.

In other words, with reference to the magnetic apparatus 10A, the second side 13 is used for magnetically keeping the ferrous element P1 to be machined, and the first side 12 is used for self-clamping to the second ferrous element P2.

The magnetic apparatus 10B, also with reference to Figures 6A to 6C, operates in the modes as described below.

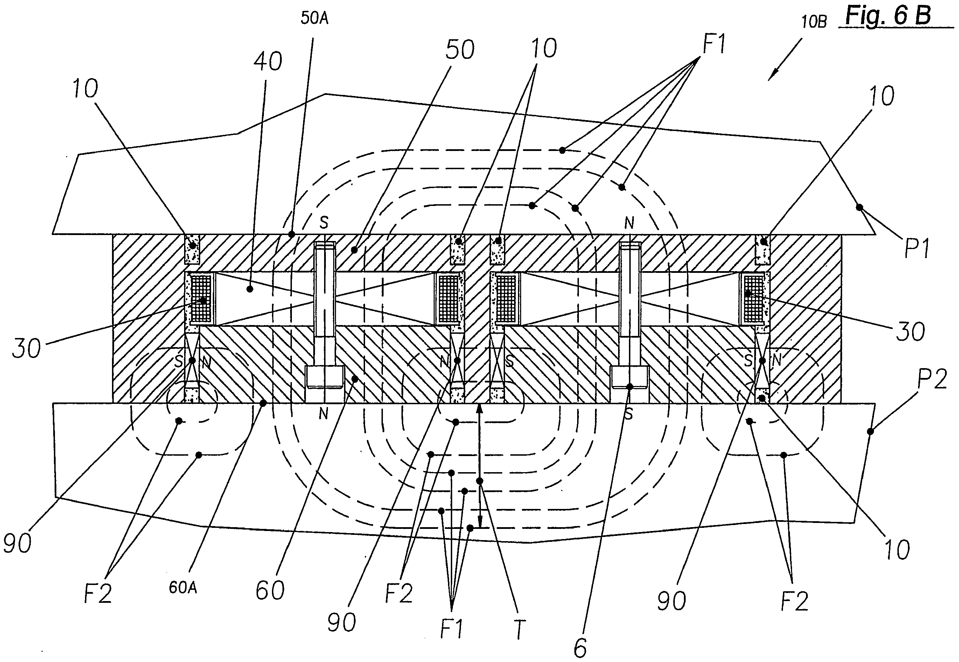

Particularly, the activating step, as shown in Figure 6B, is exactly as set forth above for the magnetic apparatus 10A with reference to the description of Figure 4C.

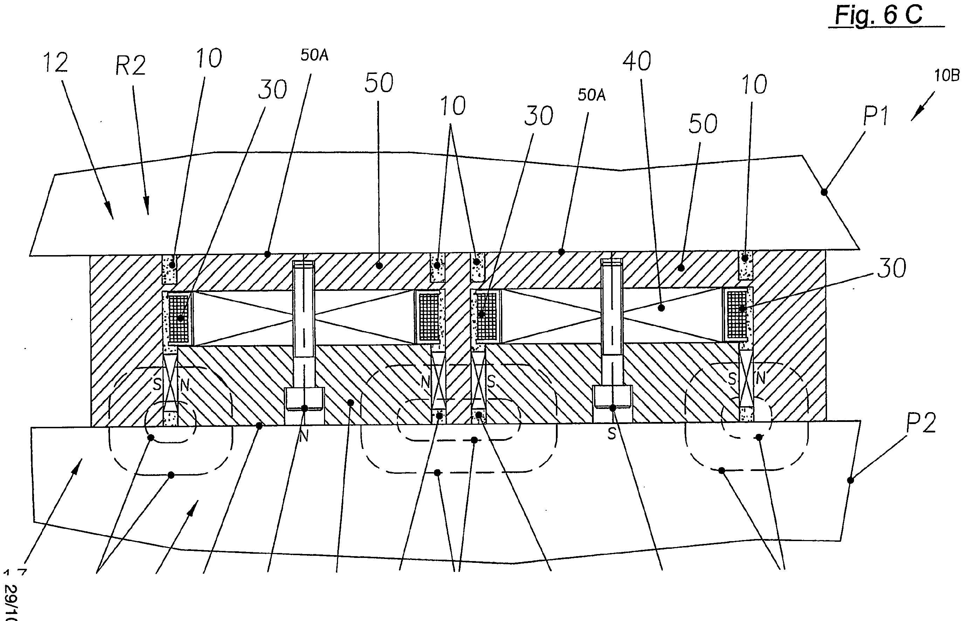

Referring now to Figure 6C, there is shown an inactivation state, in which the ferromagnetic element P1 can be safely moved closer or apart.

For this purpose, the first side 12 of the magnetic apparatus 10B is inactive, and the second side 13 is active.

It shall be noted that this operating state is required to ensure that the magnetic apparatus 10B is firmly locked or self-clamped to the ferromagnetic element P2.

Referring now to Figure 6C, there is shown the mounting and/or removal state, in which the ferromagnetic element P2 can be safely moved closer or apart.

For this purpose, the first side 12 of the magnetic apparatus 10B is active, and the second side 13 is inactive.

It should be noted that this operating state is required for removal of the magnetic apparatus 10B from the ferromagnetic element P2.

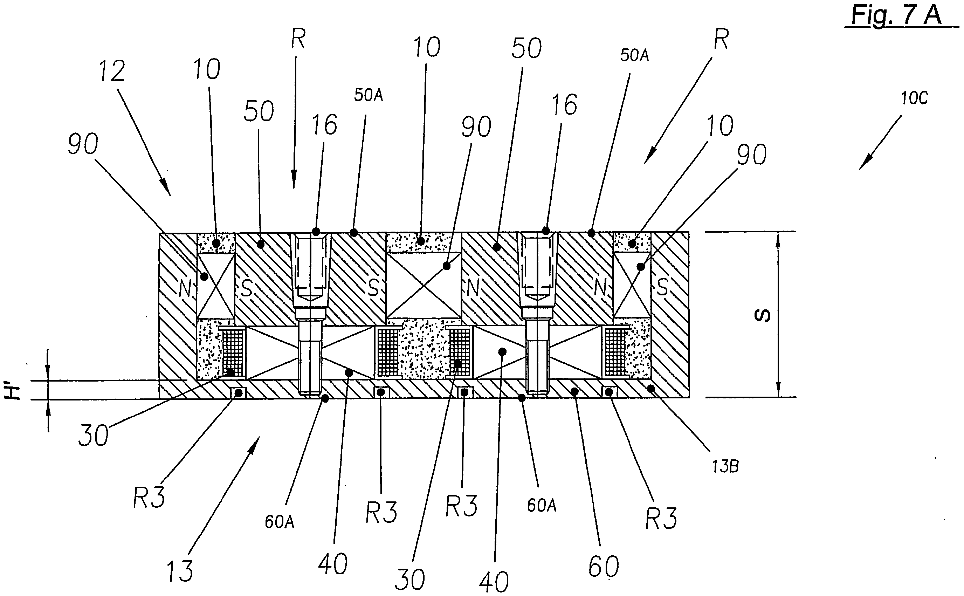

Referring now to Figure 7A, which shows a third embodiment of the magnetic apparatus of the present invention, where previously described elements are designated by identical reference numerals, it can be seen that the magnetic apparatus 10C has a support structure 11A with a bottom 13B of predetermined thickness K.

Particularly, it shall be noted that the surface 50A of the first pole piece collector 50 forms part of the clamping surface of the first side 12, whereas the surface 60A of the second pole piece collector 60 forms part of the surface of the second side 13.

Particularly, the second pole piece collector 60 is defined by the recesses R3.

Thus, it can be seen from Figure 7A, the second pole piece collector 60 is formed of the bottom 13B of predetermined thickness H' as well as the recesses R3, said second pole piece collector 60 of said magnetic apparatus 10C being penetrated by the first magnetic flux F1 to define said second magnetic clamping surface.

For this purpose, the magnetic flux F2 generated by the permanent magnet 40 comes out of the surface 60A of the second pole piece collector 60 that forms the second side 13 of the housing 2.

It should be noted that the thickness H' of the second side 13 is similar to the thickness H of the bottom of the housing 2 of a traditional magnetic apparatus as shown in Figure 1B.

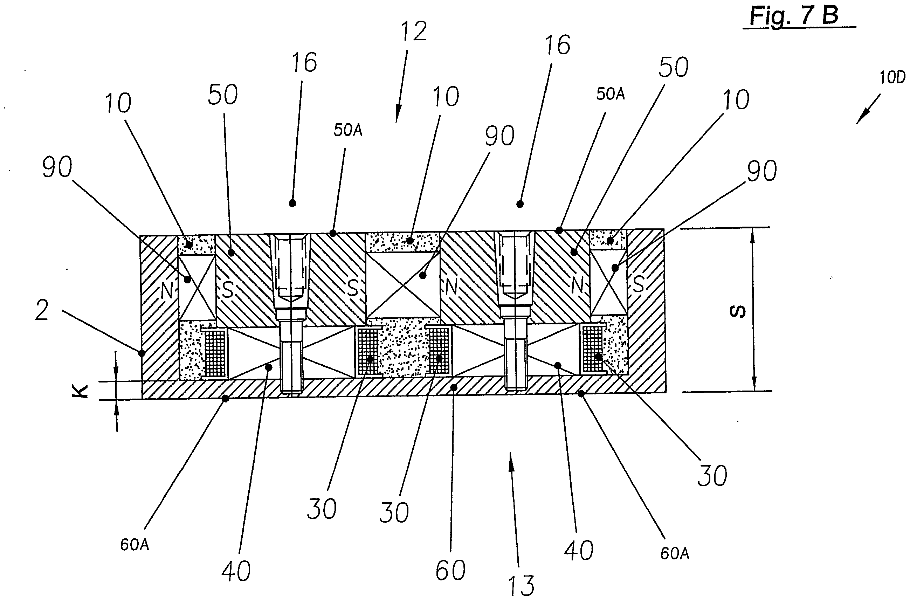

Otherwise, with reference to Figure 7B, which shows a fourth embodiment 10D of the magnetic apparatus, the thickness K of the second side 13 has been intentionally undersized with respect to the thicknesses H and/or H' of the respective magnetic apparatus.

By this arrangement, the magnetic apparatus 10D is self-clamped with a force proportional to the amount of flux that is emitted and penetrates the ferrous section K, after saturation of the bottom part 13B that does not form the second pole piece collectors 60.

In other words, the magnetic field generated by the magnetic apparatus 10C and 10D from the surface of the bottom 13B comes out from such second side 13 to a field depth T that is at the most equal to the maximum linear dimension of the second pole piece collector 60.

It should be noted, also with reference to Figure 7B that if the second pole piece collector 60 is not defined by the recesses R3, the maximum linear dimension value of the second pole piece collector 60 shall be considered as the maximum dimension of the projection of the surface of the permanent magnet 40 on the bottom 13.

It is apparent that, by appropriately calculating the undersizing of the iron section K (or the lack thereof with respect to a traditional magnetic apparatus as shown in Figures 1A and 1B) and/or the size of the recesses R3, the clamping force on the second side 13 may be determined.

Therefore, the magnetic apparatus 10C or 10D can be used for clamping the ferrous element P1 to be machined on the side 12, whereas the surface 13 of the bottom 13B can be self-clamped to a bed or any ferrous element P2.

Use of the magnetic apparatus 10C or 10D always requires the control unit 100 (not shown in Figures 7A and 7B) that can have the same operation as described above with reference to the magnetic apparatus 10A.

In other words, the control unit 100 has to be able to appropriately operate on the field of the first magnetic core 40, to cause it to have the same direction as the field generated by the second magnetic core 90 for activation of the surface 12, or an opposite direction for inactivation of the surface 12, and to demagnetize the first magnetic core 40 to allow mounting and removal of the magnetic apparatus 10C.

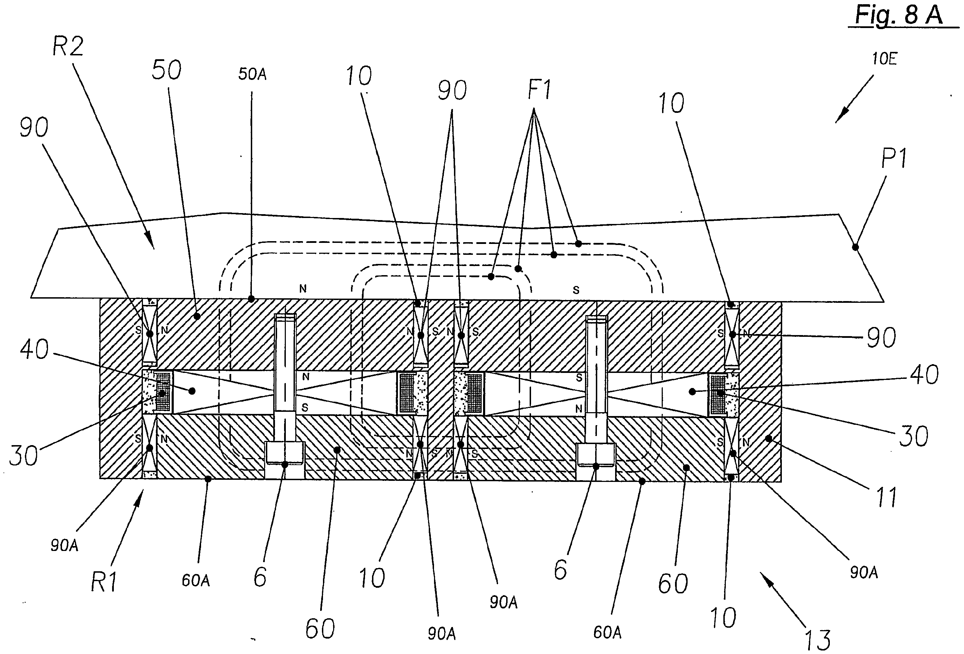

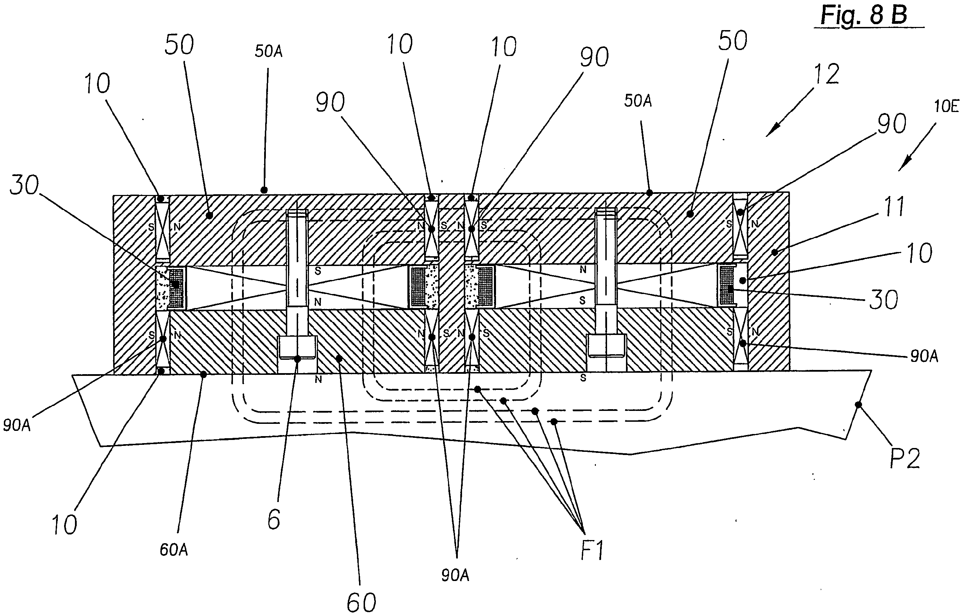

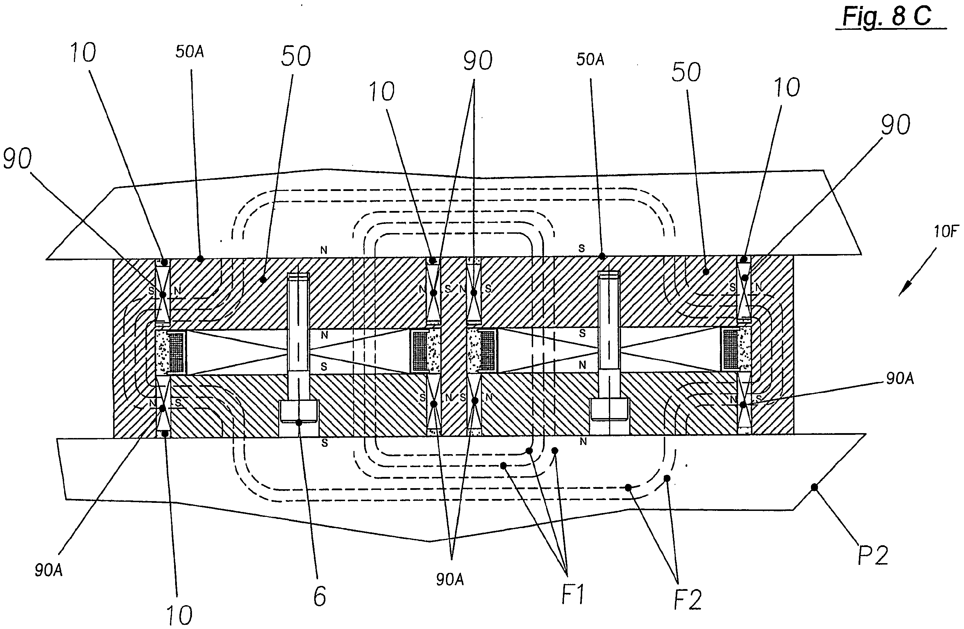

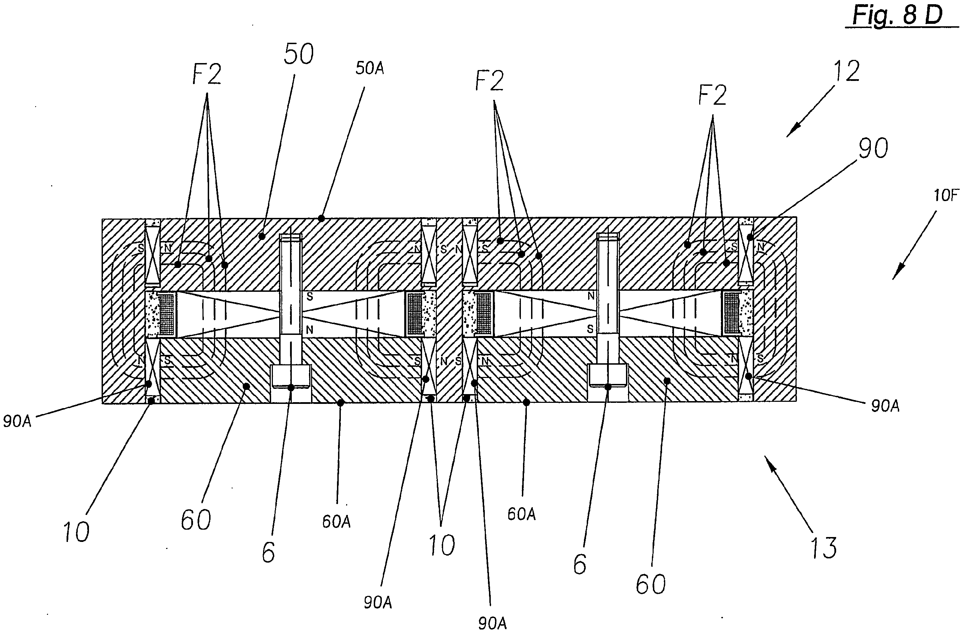

Referring now to Figures 8A to 8D, which show a fifth and a sixth embodiment 10E, 10F of the magnetic apparatus of the present invention, where previously described elements are designated by identical reference numerals, it can be seen that the magnetic apparatus 10D is so designed that, in addition to the second magnetic cores 90, for instance of the permanently magnetized non-reversible type, the support structure 11 comprises additional magnetic cores 90A, also of the non-reversible permanently magnetized type.

Particularly, the permanently magnetized non-reversible non-reversible magnetic cores 90 are accommodated in the second recesses R2, whereas the additional non-reversible permanently magnetized magnetic cores 90A are accommodated in the first recesses R1.

It should be noted that, according to the mutual orientation of the permanently magnetized non-reversible magnetic cores 90 and 90A, either of two different magnetic apparatus 10E or 10F can be obtained; namely:
- if the permanently magnetized non-reversible magnetic cores 90 and 90A are oriented in the same directions, then when the side 12 is active the side 13 is inactive and vice versa, which makes the magnetic apparatus 10E;
- if the permanently magnetized non-reversible magnetic cores 90 and 90A are oriented in opposite directions, then both sides 12 and 13 are active or inactive at the same time, which makes the magnetic apparatus 10F.

It shall be further noted that:
- the term mounted in the same direction is intended to indicate the situation in which the permanently magnetized non-reversible magnetic cores 90 are placed on the pole piece collector 50 with one polarity and the non-reversible permanently magnetized magnetic cores 90A are placed on the pole piece collector 60 with the same polarity;
- the term mounted in opposite directions is intended to indicate the situation in which the permanently magnetized non-reversible magnetic cores 90 are placed on the pole piece collector 50 with one polarity and the non-reversible permanently magnetized magnetic cores 90A are placed on the second pole piece collector 60 with an opposite polarity.

Referring now to Figure 9, a possible operational configuration of the magnetic apparatus 10A, 10B, 10C, 10D, 10E or 10F is shown.

It shall be noted that, in this Figure 9, the second side 13 of the magnetic apparatus 10A, 10B, 10C, 10D, 10E or 10F is magnetically held against a bed 17 of a machine tool 18 whereas the first side 12 of the magnetic apparatus 10A magnetically keeps the ferrous element P1 being machined (not shown).

In this operating condition of the magnetic apparatus 10A, 10B, 10C, 10D or 10F, when the ferrous element P1 is being machined, firm locking or self clamping of the magnetic apparatus 10A, 10B, 10C, 10D or 10F to the bed 17 of the machine tool 18 prevents any undesired mechanical stresses (especially bending stresses) thereby improving the accuracy with which the ferrous element P1 is machined.

It shall be further noted that the magnetic apparatus 10A, 10B, 10C, 10D or 10F as specifically shown in Figure 9 is held against the bed 17 of the machine tool 18 only by means of the magnetic force, although mechanical fastener means may be also interposed between the magnetic apparatus 10A, 10B, 10C, 10D or 10F and the bed 17, when required by specific machining processes.

As clearly shown in the above description, the magnetic apparatus of the present invention fulfills the above mentioned need and also obviates prior art drawbacks as set out in the introduction of this disclosure.

Those skilled in the art will obviously appreciate that a number of changes and variants may be made to what has been described hereinbefore, without departure from the scope of the invention, as defined in the following claims.

## Claims

1. A magnetic apparatus (10A, 10B, 10C, 10D, 10E, 10F) for magnetic clamping of ferrous elements (P1,P2), comprising:
- a support structure (11, 11A) having predetermined width (L), length (1) and thickness (S) with a plurality of pole pieces (30A)
- first and second sides (12, 13) being formed in said support structure (11, 11 A) at the larger opposite surfaces,
- said plurality of pole pieces (30A) comprising at least one first pole piece collector (50) and generating in said first side (12) at least first magnetic flux (F1) so as to define a first magnetic clamping surface for magnetically clamping first ferrous elements (P1),
**characterized in that** said plurality of pole pieces (30A) are held within the thickness (S) of said support structure (11,11A), a lateral portion (50A) of each first pole piece collector (50) forming a portion of said first side (12) and the plurality of pole pieces (30A) comprise a second pole piece collector (60), a lateral portion (60A) of said second pole piece collector (60) forming a portion of said second side (13) so as in at least one operating state of said magnetic apparatus, said at least one first magnetic flux (F1) defines a second magnetic clamping surface at said second side (13) for magnetically clamping second ferrous elements (P2), said at least one first magnetic flux (F1) coming out of said second side (13) and reclosing into an adjacent pole piece (30A) with a predetermined field depth (T).

2. A magnetic apparatus (10A,10B,10C,10D,10E,10F) as claimed in claim 1, wherein the magnetic force required to firmly secure said second ferrous element (P2) against said second clamping surface of said second side (13) is a force value at least 15% higher than the maximum force that such magnetic apparatus (10A, 10B, 10C, 10D) can exert upon the clamping surface of said first side (12).

3. A magnetic apparatus (10A,10B,10C,10D,10E,10F) as claimed in claim 1 or 2, wherein said predetermined field depth (T) of said at least one first magnetic flux (F1) coming out of said second side (13) is equal to or greater than the maximum linear dimension of said second pole piece collector (60), such field depth being adapted to firmly clamp said second ferrous elements (P2).

4. A magnetic apparatus (10A,10B,10C,10D,10E,10F) as claimed in any one of the preceding claims 1 to 3, wherein the pole pieces (30A) include an electric coil (30) for magnetization reversal surrounding a first magnetic core (40).

5. A magnetic apparatus (10A,10B,10C,10D,10E,10F) as claimed in claim 4, wherein said support structure (11, 11A) comprises first recesses (R1) for accommodating said second pole piece collector (60), said first magnetic core (40) and said electric coil (30) for changing the magnetization state of the first magnetic core (40).

6. A magnetic apparatus (10A,10B,10C,10D,10E,10F) as claimed in claim 1, wherein the pole pieces (30A) comprise second magnetic cores (90) for generating a second magnetic flux (F2) on said first clamping surface of said first side (12), to magnetically clamp said first ferrous elements (P1) by means of said first and second fluxes.

7. A magnetic apparatus (10A,10B,10C,10D,10E,10F) as claimed in claim 6, which comprises second recesses (R2) for accommodating said first magnetic cores (90).

8. A magnetic apparatus (10A,10B,10C,10D,10E,10F) as claimed in claim 1, wherein said second side (13) is formed of a bottom (13B) of predetermined thickness (K), said bottom (13B) of said magnetic apparatus being penetrated by said first magnetic flux (F1) to define said second magnetic clamping surface of said second side (13).

9. A magnetic apparatus (10A,10B,10C,10D,10E,10F) as claimed in claim 1, wherein said second side (13) is formed of a bottom (13B) of predetermined thickness (H'), said second side comprising third recesses (R3) which are adapted to define the linear dimension of said second pole piece collector (60).

10. A magnetic apparatus (10A,10B,10C,10D,10E,10F) as claimed in claim 8 or 9, wherein said support structure (11A) comprises first recesses (R1) for accommodating said first pole piece collector (50), said first magnetic core (40) and said electric coil (30) for magnetization reversal.

11. A magnetic apparatus (10A,10B,10C,10D,10E,10F) as claimed in claim 10, wherein the pole pieces (30A) comprise second magnetic cores (90) for generating a second magnetic flux (F2) on said first clamping surface of said first side (12), to magnetically clamp said first ferrous elements (P1) by means of said first and second fluxes (F1, F2).

12. A magnetic apparatus (10A,10B,10C,10D,10E,10F) as claimed in claim 4, wherein the pole pieces (30A) comprise third magnetic cores (90A) located proximate to said second pole piece collector (60) for generating a second magnetic flux (F2) on said second clamping surface of said first side (12), to magnetically clamp said first ferrous elements (P2) by means of said first and second fluxes.

13. A magnetic apparatus (10A,10B,10C,10D,10E,10F) as claimed in claim 12, wherein said first magnetic core (40) is a permanently magnetized reversible magnetic core, said second and third magnetic cores (90, 90A) are permanently magnetized non-reversible magnetic cores.

14. A magnetic apparatus (10A,10B,10C,10D,10E,10F) as claimed in any one of the preceding claims wherein the pluralities of pole pieces (30A) have a triangular, quadrangular, elliptical or circular plan shape.

15. A combination of a magnetic apparatus (10A,10B,10C,10D,10E,10F) as claimed in claim 1 and a control unit (100) for controlling the operating states of the magnetic apparatus (10A, 10B, 10C, 10D) said control unit (100) being **characterized in that** it comprises electron tubes operably connected in antiparallel arrangement to allow passage of the positive half-wave and/or the negative half-wave and/or the combined passage of positive and negative half-waves of a current, according to the operating state required for operation of said magnetic apparatus (10A, 10B, 10C, 10D) when the magnetic apparatus (10A, 10B, 10C, 10D) is in the activated/inactivated state, and when the magnetic apparatus (10A, 10B, 10C, 10D) is in the mounting/removal state.

16. A combination of a magnetic apparatus (10A, 10B, 10C, 10D, 10E, 10F) for magnetically clamping ferrous elements (P1,P2) as claimed in any one of the preceding claims 1 to 14 and a device for machining (18) ferrous workpieces, **characterized in that** said second magnetic clamping surface of said second side (13) of said magnetic apparatus (10A, 10B, 10C, 10D, 10E, 10F) being magnetically secured to said device (18) for machining ferrous workpieces.

17. A combination as claimed in claim 16, wherein said device for machining workpieces is a bed (17) of a machine tool.

## Patentansprüche

1. Magnetvorrichtung (10A, 10B, 10C, 10D, 10E, 10F) zum magnetischen Einspannen von eisenhaltigen Elementen (P1, P2), umfassend:
- eine Tragstruktur (11, 11A), deren Breite (L), Länge (I) Dicke (S) vorbestimmt sind, mit einer Vielzahl von Polschuhen (30A),
- erste und zweite Seiten (12, 13), die bei dieser Tragstruktur (11, 11A) an den gegenüberliegenden größeren Oberflächen ausgebildet sind,
- wobei diese Vielzahl von Polschuhen (30A) mindestens einen ersten Polschuh-Kommutator (50) umfasst und in der ersten Seite (12) mindestens einen ersten magnetischen Fluss (F1) erzeugt, um eine erste magnetische Spannfläche zum magnetischen Einspannen von ersten eisenhaltigen Elementen (P1) zu definieren, **dadurch gekennzeichnet, dass** die Vielzahl von Polschuhen (30A) innerhalb der Dicke (S) der Tragstruktur (11, 11A) enthalten ist, ein seitlicher Abschnitt (50A) von jedem ersten Polschuh-Kommutator (50) einen Abschnitt der ersten Seite (12) bildet und die Vielzahl von Polschuhen (30A) einen zweiten Polschuh-Kommutator (60) umfasst, wobei ein seitlicher Abschnitt (60A) dieses zweiten Polschuh-Kommutators (60) einen Abschnitt der zweiten Seite (13) bildet, so dass der mindestens eine erste magnetische Fluss (F1) in mindestens einem Betriebszustand der Magnetvorrichtung eine zweite magnetische Spannfläche zum magnetischen Einspannen von eisenhaltigen Elementen (P2) an der zweiten Seite (13) definiert, wobei der mindestens eine erste magnetische Fluss (F1) aus der zweiten Seite (13) austritt und mit einer vorbestimmten Feldtiefe (T) wieder in einen angrenzenden Polschuh (30A) eintritt.

2. Magnetvorrichtung (10A, 10B, 10C, 10D, 10E, 10F) nach Anspruch 1, wobei die zum festen Fixieren des zweiten eisenhaltigen Elements (P2) gegen die zweite Spannfläche der zweiten Seite (13) erforderliche Magnetkraft eine Kraft ist, die um mindestens 15% größer als die maximale Kraft ist, die eine solche Magnetvorrichtung (10A, 10B, 10C, 10D) auf die Spannfläche der ersten Seite (12) ausüben kann.

3. Magnetvorrichtung (10A, 10B, 10C, 10D, 10E, 10F) nach Anspruch 1 oder 2, wobei die vorbestimmte Feldtiefe (T) des aus der zweiten Seite (13) austretenden mindestens einen ersten magnetischen Flusses (F1) gleich oder größer als die maximale lineare Abmessung des zweiten Polschuh-Kommutators (60) ist, wobei diese Feldtiefe geeignet ist, die zweiten eisenhaltigen Elemente (P2) fest einzuspannen.

4. Magnetvorrichtung (10A, 10B, 10C, 10D, 10E, 10F) nach einem der vorherigen Ansprüche 1 bis 3, wobei die Polschuhe (30A) eine einen ersten Magnetkern (40) umschließende elektrische Spule (30) zum Umkehren der Magnetisierung umfassen.

5. Magnetvorrichtung (10A, 10B, 10C, 10D, 10E, 10F) nach Anspruch 4, wobei die Tragstruktur (11, 11A) erste Aussparungen (R1) zum Unterbringen des zweiten Polschuh-Kommutators (60), des ersten Magnetkerns (40) und der elektrischen Spule (30) zum Ändern des Magnetisierungszustands des ersten Magnetkerns (40) umfasst.

6. Magnetvorrichtung (10A, 10B, 10C, 10D, 10E, 10F) nach Anspruch 1, wobei die Polschuhe (30A) zweite Magnetkerne (90) zum Erzeugen eines zweiten magnetischen Flusses (F2) auf der ersten Spannfläche der ersten Seite (12) umfassen, um die ersten eisenhaltigen Elemente (P1) mit Hilfe des ersten und des zweiten Flusses magnetisch einzuspannen.

7. Magnetvorrichtung (10A, 10B, 10C, 10D, 10E, 10F) nach Anspruch 6, die zweite Aussparungen (R2) zum Unterbringen der ersten Magnetkerne (90) umfasst.

8. Magnetvorrichtung (10A, 10B, 10C, 10D, 10E, 10F) nach Anspruch 1, wobei die zweite Seite (13) aus einem Boden (13B) vorbestimmter Dicke (K) gebildet ist, wobei dieser Boden (13B) der Magnetvorrichtung vom ersten magnetischen Fluss (F1) durchdrungen wird, um die zweite magnetische Spannfläche der zweiten Seite (13) zu definieren.

9. Magnetvorrichtung (10A, 10B, 10C, 10D, 10E, 10F) nach Anspruch 1, wobei die zweite Seite (13) aus einem Boden (13B) vorbestimmter Dicke (H') gebildet ist, wobei die zweite Seite dritte Aussparungen (R3) umfasst, die geeignet sind, die lineare Abmessung des zweiten Polschuh-Kommutators (60) festzulegen.

10. Magnetvorrichtung (10A, 10B, 10C, 10D, 10E, 10F) nach Anspruch 8 oder 9, wobei die Tragstruktur (11A) erste Aussparungen (R1) zum Unterbringen des ersten Polschuh-Kommutators (50), des ersten Magnetkerns (40) und der elektrischen Spule (30) zum Umkehren der Magnetisierung umfasst.

11. Magnetvorrichtung (10A, 10B, 10C, 10D, 10E, 10F) nach Anspruch 10, wobei die Polschuhe (30A) zweite Magnetkerne (90) zum Erzeugen eines zweiten magnetischen Flusses (F2) auf der ersten Spannfläche der ersten Seite (12) umfassen, um die ersten eisenhaltigen Elemente (P1) mit Hilfe des ersten und des zweiten Flusses (F1, F2) magnetisch einzuspannen.

12. Magnetvorrichtung (10A, 10B, 10C, 10D, 10E, 10F) nach Anspruch 4, wobei die Polschuhe (30A) in der Nähe des zweiten Polschuh-Kommutators (60) angeordnete dritte Magnetkerne (90A) zum Erzeugen eines zweiten magnetischen Flusses (F2) auf der zweiten Spannfläche der ersten Seite (12) umfassen, um die ersten eisenhaltigen Elemente (P2) mit Hilfe des ersten und des zweiten Flusses magnetisch einzuspannen.

13. Magnetvorrichtung (10A, 10B, 10C, 10D, 10E, 10F) nach Anspruch 12, wobei der erste Magnetkern (40) ein permanent magnetisierter umkehrbarer Magnetkern ist , wobei der zweite und der dritte Magnetkern (90, 90A) permanent magnetisierte nichtumkehrbare Magnetkerne sind.

14. Magnetvorrichtung (10A, 10B, 10C, 10D, 10E, 10F) nach einem der vorherigen Ansprüche, wobei die Vielzahlen von Polschuhen (30A) eine dreieckige, viereckige, elliptische oder kreisrunde ebene Form haben.

15. Kombination aus einer Magnetvorrichtung (10A, 10B, 10C, 10D, 10E, 10F) nach Anspruch 1 und einer Steuereinheit (100) zum Steuern der Betriebszustände der Magnetvorrichtung (10A, 10B, 10C, 10D), wobei diese Steuereinheit (100) **dadurch gekennzeichnet ist, dass** sie Elektronenröhren umfasst, die betriebsfähig in einer antiparallelen Anordnung verbunden sind, um den Durchgang der positiven Halbwelle und/oder der negativen Halbwelle und/oder den kombinierten Durchgang von positiven und negativen Halbwellen eines Stroms entsprechend dem zum Betrieb der Magnetvorrichtung (10A, 10B, 10C, 10D) erforderlichen Betriebszustand zu ermöglichen, wenn sich die Magnetvorrichtung (10A, 10B, 10C, 10D) im aktivierten/inaktivierten Zustand befindet und wenn sich die Magnetvorrichtung (10A, 10B, 10C, 10D) Einbau-/Ausbauzustand befindet.

16. Kombination aus einer Magnetvorrichtung (10A, 10B, 10C, 10D, 10E, 10F) zum magnetischen Einspannen von eisenhaltigen Elementen (P1, P2) nach einem der vorherigen Ansprüche 1 bis 14 und einer Vorrichtung zum maschinellen Bearbeiten (18) von eisenhaltigen Werkstücken, **dadurch gekennzeichnet, dass** die zweite magnetische Spannfläche der zweiten Seite (13) der Magnetvorrichtung (10A, 10B, 10C, 10D, 10E, 10F) magnetisch an der Vorrichtung (18) zum maschinellen Bearbeiten von eisenhaltigen Werkstücken befestigt ist.

17. Kombination nach Anspruch 16, wobei die Vorrichtung zum maschinellen Bearbeiten von Werkstücken ein Tisch (17) einer Werkzeugmaschine ist.

## Revendications

1. Dispositif magnétique (10A, 10B, 10C, 10D, 10E, 10F) pour le blocage magnétique d'éléments ferreux (P1, P2), comprenant :
- une structure de support (11, 11A) ayant une largeur (L), une longueur (I) et une épaisseur (S) prédéterminées avec une pluralité de pièces polaires (30A)
- des premier et deuxième côtés (12, 13) étant formés dans ladite structure de support (11, 11A) au niveau des surfaces opposées plus grandes,
- ladite pluralité de pièces polaires (30A) comprenant au moins un premier collecteur de pièce polaire (50) et générant dans ledit premier côté (12) au moins un premier flux magnétique (F1) de manière à définir une première surface de blocage magnétique pour bloquer magnétiquement des premiers éléments ferreux (P1),
**caractérisé en ce que** ladite pluralité de pièces polaires (30A) est maintenue dans l'épaisseur (S) de ladite structure de support (11, 11A), une portion latérale (50A) de chaque premier collecteur de pièce polaire (50) formant une portion dudit premier côté (12) et la pluralité de pièces polaires (30A) comprend un deuxième collecteur de pièce polaire (60), une portion latérale (60A) dudit deuxième collecteur de pièce polaire (60) formant une portion dudit deuxième côté (13) de manière que, dans au moins un état de fonctionnement dudit dispositif magnétique, ledit au moins un premier flux magnétique (F1) définisse une deuxième surface de blocage magnétique au niveau dudit deuxième côté (13) pour bloquer magnétiquement des deuxièmes éléments ferreux (P2), ledit au moins un premier flux magnétique (F1) sortant dudit deuxième côté (13) et se refermant dans une pièce polaire adjacente (30A) avec une profondeur de champ prédéterminée (T).

2. Dispositif magnétique (10A, 10B, 10C, 10D, 10E, 10F) selon la revendication 1, dans lequel la force magnétique nécessaire pour fixer solidement ledit deuxième élément ferreux (P2) contre ladite deuxième surface de blocage dudit deuxième côté (13) est une valeur de force supérieure d'au moins 15% à la force maximale qu'un tel dispositif magnétique (10A, 10B, 10C, 10D, 10E) peut exercer sur la surface de blocage dudit premier côté (12).

3. Dispositif magnétique (10A, 10B, 10C, 10D, 10E, 10F) selon la revendication 1 ou 2, dans lequel ladite profondeur de champ prédéterminée (T) dudit au moins un premier flux magnétique (F1) sortant dudit deuxième côté (13) est égale ou supérieure à la dimension linéaire maximale dudit deuxième collecteur de pièce polaire (60), un telle profondeur de champ étant adaptée pour bloquer solidement lesdits deuxièmes éléments ferreux (P2).

4. Dispositif magnétique (10A, 10B, 10C, 10D, 10E, 10F) selon l'une quelconque des revendications 1 à 3, dans lequel les pièces polaires (30A) comprennent une bobine électrique d'inversion de magnétisation (30) entourant un premier noyau magnétique (40).

5. Dispositif magnétique (10A, 10B, 10C, 10D, 10E, 10F) selon la revendication 4, dans lequel ladite structure de support (11, 11A) comprend des premiers évidements (R1) pour loger ledit deuxième collecteur de pièce polaire (60), ledit premier noyau magnétique (40) et ladite bobine électrique (30) pour changer l'état de magnétisation du premier noyau magnétique (40).

6. Dispositif magnétique (10A, 10B, 10C, 10D, 10E, 10F) selon la revendication 1, dans lequel les pièces polaires (30A) comprennent des deuxièmes noyaux magnétiques (90) pour générer un deuxième flux magnétique (F2) sur ladite première surface de blocage dudit premier côté (12), pour bloquer magnétiquement lesdits premiers éléments ferreux (P1) au moyen desdits premier et deuxième flux.

7. Dispositif magnétique (10A, 10B, 10C, 10D, 10E, 10F) selon la revendication 6, qui comprend des deuxièmes évidements (R2) pour loger lesdits premiers noyaux magnétiques (90).

8. Dispositif magnétique (10A, 10B, 10C, 10D, 10E, 10F) selon la revendication 1, dans lequel ledit deuxième côté (13) est formé d'une partie inférieure (13B) d'épaisseur prédéterminée (K), ladite partie inférieure (13B) dudit dispositif magnétique étant pénétrée par ledit premier flux magnétique (F1) pour définir ladite deuxième surface de blocage magnétique dudit deuxième côté (13).

9. Dispositif magnétique (10A, 10B, 10C, 10D, 10E, lOF) selon la revendication 1, dans lequel ledit deuxième côté (13) est formé d'une partie inférieure (13B) d'épaisseur prédéterminée (H'), ledit deuxième côté comprenant des troisièmes évidements (R3) qui sont adaptés pour définir la dimension linéaire dudit deuxième collecteur de pièce polaire (60).

10. Dispositif magnétique (10A, 10B, 10C, 10D, 10E, 10F) selon la revendication 8 ou 9, dans lequel ladite structure de support (11A) comprend des premiers évidements (R1) pour loger ledit premier collecteur de pièce polaire (50), ledit premier noyau magnétique (40) et ladite bobine électrique d'inversion de magnétisation (30).

11. Dispositif magnétique (10A, 10B, 10C, 10D, 10E, 10F) selon la revendication 10, dans lequel les pièces polaires (30A) comprennent des deuxièmes noyaux magnétiques (90) pour générer un deuxième flux magnétique (F2) sur ladite première surface de blocage dudit premier côté (12), pour bloquer magnétiquement lesdits premiers éléments ferreux (P1) au moyen desdits premier et deuxième flux (F1, F2).

12. Dispositif magnétique (10A, 10B, 10C, 10D, 10E, 10F) selon la revendication 4, dans lequel les pièces polaires (30A) comprennent des troisièmes noyaux magnétiques (90A) situés à proximité dudit deuxième collecteur de pièce polaire (60) pour générer un deuxième flux magnétique (F2) sur ladite deuxième surface de blocage dudit premier côté (12), pour bloquer magnétiquement lesdits premiers éléments ferreux (P2) au moyen desdits premier et deuxième flux.

13. Dispositif magnétique (10A, 10B, 10C, 10D, 10E, 10F) selon la revendication 12, dans lequel ledit premier noyau magnétique (40) est un noyau magnétique réversible magnétisé en permanence, lesdits deuxième et troisième noyaux magnétiques (90, 90A) sont des noyaux magnétiques non réversibles magnétisés en permanence.

14. Dispositif magnétique (10A, 10B, 10C, 10D, 10E, 10F) selon l'une quelconque des revendications précédentes, dans lequel les pluralités de pièces polaires (30A) ont un profil plan triangulaire, quadrangulaire, elliptique ou circulaire.

15. Combinaison d'un dispositif magnétique (10A, 10B, 10C, 10D, 10E, 10F) selon la revendication 1 et d'une unité de commande (100) pour commander des états de fonctionnement du dispositif magnétique (10A, 10B, 10C, 10D), ladite unité de commande (100) étant **caractérisée en ce qu'**elle comprend des tubes électroniques connectés fonctionnellement dans une disposition antiparallèle pour permettre le passage de la demi-onde positive et/ou de la demi-onde négative et/ou le passage combiné des demi-ondes positive et négative d'un courant, en fonction de l'état de fonctionnement nécessaire pour le fonctionnement dudit dispositif magnétique (10A, 10B, 10C, 10D) quand le dispositif magnétique (10A, 10B, 10C, 10D) est dans l'état activé/désactivé, et quand le dispositif magnétique (10A, 10B, 10C, 10D) est dans l'état de montage/démontage.

16. Combinaison d'un dispositif magnétique (10A, 10B, 10C, 10D, 10E, 10F) pour le blocage magnétique d'éléments ferreux (P1, P2) selon l'une quelconque des revendications précédentes 1 à 14 et d'un dispositif (18) pour l'usinage de pièces ferreuses à usiner, **caractérisée en ce que** ladite deuxième surface de blocage magnétique dudit deuxième côté (13) dudit dispositif magnétique (10A, 10B, 10C, 10D, 10E, 10F) sont fixées magnétiquement audit dispositif (18) pour l'usinage de pièces ferreuses à usiner.

17. Combinaison selon la revendication 16, dans laquelle ledit dispositif pour l'usinage de pièces ferreuses à usiner est un bâti (17) d'une machine-outil.
